(19) **Europäisches Patentamt / European Patent Office / Office européen des brevets**

(11) **EP 4 511 676 B1**

(12) **EUROPEAN PATENT SPECIFICATION**

(45) Date of publication and mention
of the grant of the patent:
**08.04.2026 Bulletin 2026/15**

(21) Application number: **23813858.0**

(22) Date of filing: **02.11.2023**

(51) International Patent Classification (IPC):
**G01S 7/4861** (2020.01)   **G01S 7/4863** (2020.01)
**G01S 7/487** (2006.01)   **G01S 17/18** (2020.01)
**G01S 17/894** (2020.01)

(52) Cooperative Patent Classification (CPC):
**G01S 7/4865; G01S 7/4861; G01S 7/4863;
G01S 7/4876; G01S 17/18**

(86) International application number:
**PCT/IB2023/061071**

(87) International publication number:
**WO 2024/095201 (10.05.2024 Gazette 2024/19)**

(54) **IMPROVED DEVICE FOR MEASURING THE DISTANCE BETWEEN THE SAME DEVICE AND A REFERENCE OBJECT USING LIGHT RADIATION**

VERBESSERTE VORRICHTUNG ZUR MESSUNG DES ABSTANDES ZWISCHEN DERSELBEN VORRICHTUNG UND EINEM REFERENZOBJEKT MITTELS LICHTSTRAHLUNG

DISPOSITIF AMÉLIORÉ POUR MESURE DE DISTANCE ENTRE LEDIT DISPOSITIF ET UN OBJET DE RÉFÉRENCE À L'AIDE D'UN RAYONNEMENT LUMINEUX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.11.2022 IT 202200022659**

(43) Date of publication of application:
**26.02.2025 Bulletin 2025/09**

(73) Proprietor: **Fondazione Bruno Kessler
38122 Trento (IT)**

(72) Inventors:
• **GASPARINI, Leonardo**
**38057 Pergine Valsugana (TN) (IT)**
• **TONTINI, Alessandro**
**38052 Caldonazzo (TN) (IT)**
• **MAZZUCCHI, Sonia**
**38122 Trento (IT)**

(74) Representative: **Marchioro, Paolo
Studio Bonini S.r.l.
Corso Fogazzaro, 8
36100 Vicenza (IT)**

(56) References cited:
**US-A1- 2019 250 257    US-B2- 9 874 629**

EP 4 511 676 B1

**Description**

The invention relates to an improved device for measuring the distance between the same device and a reference object using light radiation.

They are known two categories of devices for measuring the distance which are based on the emission of a light radiation directed towards a reference object and on the detection of the aforesaid light radiation back from the same reference object.

A first category relates to the so-called "indirect time of flight" devices, i.e. configured to emit a modulated light radiation, e.g. a sine wave, and to measure the phase shift of this light radiation back from the aforesaid reference object. This phase shift is proportional to the time of flight and thus to the distance measurement.

A second category of measuring devices includes the so-called "direct time of flight" devices, which emit one or more light pulses and measure in a direct manner the time of flight it takes for this pulse to return from the aforesaid reference object.

The present invention relates to this second category of devices.

In detail, prior art measuring devices belonging to this second category comprise means for emitting such light radiation and receiving means comprising an area sensitive to such light radiation. The prior art measuring devices also comprise a processing group capable of determining the time interval, or "time of flight", between the emission of such light radiation by the emission means and the detection thereof by the receiving means.

The value of the aforesaid time interval, also known in technical jargon as "Time of Flight", ToF, and usually referred to the photons belonging to the aforesaid light radiation, is directly proportional to the distance between the measuring device and the reference object. In this regard, the processing group of the known measuring devices is usually configured to determine the value of this distance.

From an implementation perspective, a number of architectures for the aforesaid measuring devices are known, all of which share the fact that the sensitive area of the aforesaid receiving means is defined by one or more photosensitive microcells, also known as "pixels" in technical jargon.

Usually, each of these photosensitive microcells or pixels comprises at least one single-photon device, in particular a SPAD (Single Photon Avalanche Diode).

Single-photon devices refer to those devices capable of providing an output pulse for each single photon detected.

It is not excluded, however, that such photosensitive microcells are based on different single-photon technologies, such as SNSPDs (Superconducting Nanowire Single-Photon Detectors).

Furthermore, a further feature of the various embodiments of the prior art is that the aforementioned processing group is provided with one or more processing units, each of which is configured to perform the conversion of the aforesaid time of flight of a specific photosensitive microcell into an analogue or digital representation which is used by the same processing group to determine the distance between the measuring device and the reference object.

Usually, each of the aforesaid processing units comprises a circuit block known by the acronym TAC (Time to Analog Converter) or TDC (Time to Digital Converter) capable of performing the aforesaid conversion and which may or may not be defined on the same surface as the sensitive area.

It is equally well known that the use of the aforementioned single-photon devices, such as SPADs or SNSPDs, as photosensitive microcells, introduces a non-ideal element in the detection of light radiation due to the very intrinsic characteristics of such devices.

In particular, as is well known, each of these single-photon devices is capable of detecting the incidence of the single photon and, once this photon is detected, the same single-photon device is saturated and enters an idle time interval, during which it is no longer sensitive to further light radiation. This idle time is known in the technical jargon as dead time.

Similarly, TACs and TDCs are also characterised by a dead time between one measurement and the following one, for instance due to the need to transfer the measured data into a memory and to reset in order to take a new measurement.

As far as the present context is concerned, from now on, and unless otherwise specified, reference will generally be made to the dead time of a photosensitive microcell, meaning that this dead time can be determined in combination with the single-photon device (SPAD, SNSPD, etc.) or alternatively by the device itself and/or by the relevant conversion circuit block.

Therefore, disadvantageously, due to the aforesaid behaviour of
each photosensitive microcell, and due to the statistical characteristics of the light radiation flux, this photon detection occurs following a non-linear, e.g. exponential negative, trend in the case of devices synchronously enabled with the measurement window.

In particular, in the case of high intensity of light radiation, disadvantageously, all detections occur in the first instants of the beginning of the observation window, saturating the channel and thus making measurement impossible.

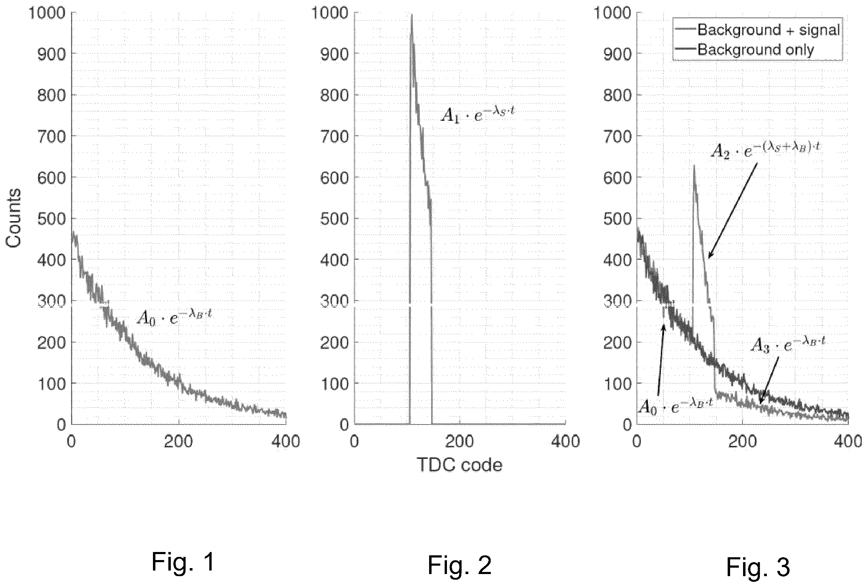

In other words, in the case of continuous light radiation, whether it is due to background noise or to a light flux generated by specific emission means, as in the case of measuring devices, each single-photon photosensitive microcell is not capable of generating a continuous electrical signal proportional to the light radiation flux for the entire duration of the observation window. This is exemplified in the graph in Fig. 1 regarding the light radiation comprising only background noise, and in the graph in Fig. 2 for a light radiation comprising only a light flux generated by specific emission means.

Moreover, disadvantageously, in case the light radiation is composed of both the background noise and the light flux generated by the aforesaid emission means, this non-linearity ensures that the response of the single-photon photosensitive microcell is not equal to the sum of the signals represented in the graphs in Figs. 1 and 2. This is clear in the graph shown in Fig. 3.

Consequently, in the particular context of the use of single-photon photosensitive microcells, particularly SPADs or SNSPDs, in distance-measuring devices, this non-linearity introduces a greater difficulty in processing the acquired data, inaccuracy in determining the distance to be measured, or the impossibility of making the measurement (saturation).

In order to overcome this drawback due to the non-linearity of the response of the single-photon photosensitive microcells, a solution adopted in the prior art is to carry out several observations of the light radiation, and it is provided, for each observation, to store, in special storage means, the data detected by each single-photon photosensitive microcell, in order to define, for each of the single-photon photosensitive microcells, a relative histogram consisting of the data collected during the plurality of observations, and then to process such histograms and accurately extract a time of flight ToF.

However, even if such an embodiment allows for greater precision in determining the distance value of such a reference object, disadvantageously it requires a non-negligible size of the storage means used for the accumulation of the data defining the aforesaid histograms, and in addition it requires a high calculation capacity.

Consequently, this embodiment, disadvantageously, results in high energy consumption, an increased cost for the implementation of such a measuring device, and also an increase in the physical size of the device itself.

Document US2019250257 describes a device for measuring the distance of a reference object according to the preamble of the independent claim of the present application.

Document US2015177369 describes a receiver unit including at least one single photon avalanche detector element of a Geiger mode and a time-to-digital converter circuit. Each single photon avalanche detector element is enabled to detect a photon in at least one time-gated window, and each single photon avalanche detector element is configured to output an electric pulse in response to detection of a photon of optical radiation within the at least one time-gated window. The time-to-digital converter circuit provides timing data associated with said electric pulse for determination of a distance of a target on the basis of the timing data provided by the time-to-digital converter circuit.

The present invention intends to overcome all the aforementioned drawbacks.

In particular, one of the objects of the invention is to realise a measuring device, the sensitive area of which comprises one or more photosensitive microcells capable of giving a linear response following the incidence of light radiation on the same photosensitive microcells.

Accordingly, an object of the invention is to realise a measuring device capable of providing an accurate value of the distance to a reference object, without the need to store the data acquired during the plurality of observations of said light radiation, in order to create the aforesaid histograms, and consequently without the need to computationally perform costly processing of such histograms.

Thus, an object of the invention is to realise a measuring device which allows to obtain a high accuracy of the distance value of a reference object and, at the same time, a reduced and simpler calculation and storage capacity, as compared to known measuring devices configured to implement the storage and processing of the aforesaid histograms.

Therefore, an object of the invention is to realise a measuring device that allows a high accuracy of the value of the aforesaid distance and, at the same time, is smaller and cheaper than the devices of the prior art that implement such storage and processing of histograms.

It is also an object of the invention to realise a measuring device that allows to overcome the saturation limit of single-photon photosensitive microcells, enabling measurements to be made even in the presence of very intense background noise.

The aforesaid objects are achieved by realising a measuring device according to the main claim.

Further features of the measuring device of the invention are described in the dependent claims.

The aforesaid objects, together with the advantages that will be mentioned hereinafter, will be readily apparent during the description of some preferred embodiments of the invention, which are given by way of non-limiting indication with reference to the accompanying drawings, where:

- Fig. 1 shows the graph of the response of a photosensitive microcell of the prior art following the incidence on it of photons belonging to the background noise, wherein the characteristic exponential decay typical of Poissonian processes can be observed;
- Fig. 2 shows the graph of the response of a photosensitive microcell of the prior art following the incidence on it of photons belonging to a pulsed-type light radiation with a pulse of predefined duration;

- Fig. 3 shows the graph of the response of a photosensitive microcell of the prior art following the incidence on it of photons belonging to both background noise and pulsed-type light radiation;

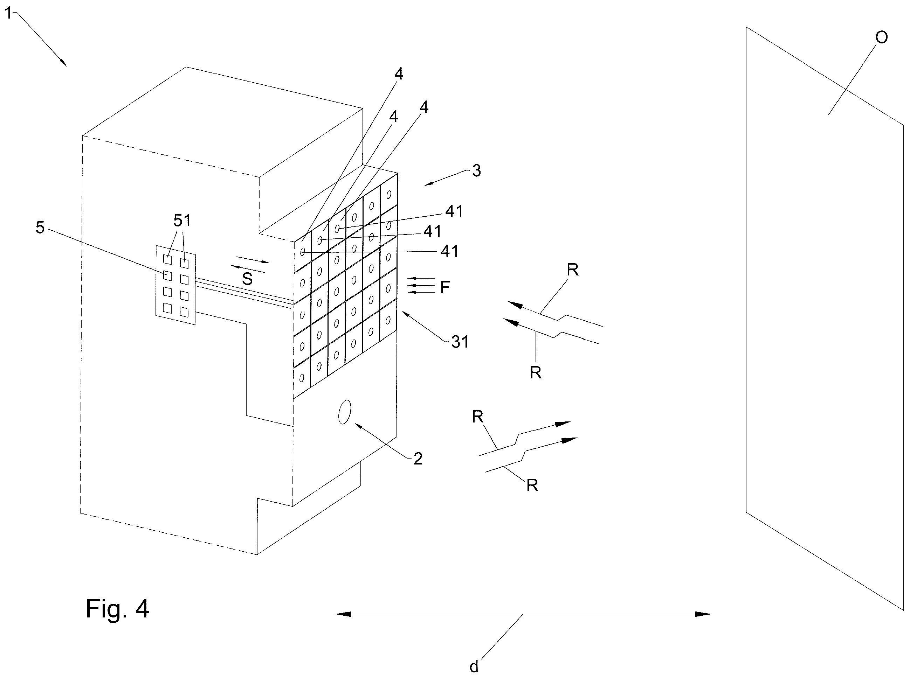

- Fig. 4 shows schematically a measuring device of the invention;

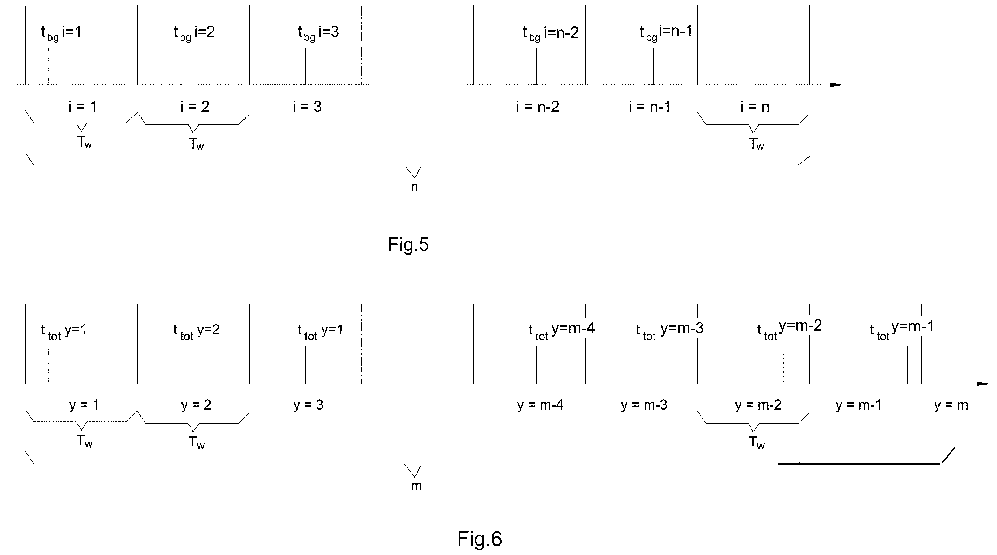

- Fig. 5 shows an example of the sequence of observation time windows according to a first acquisition step implemented by the measuring device of the invention, during which only events determined by background noise are acquired;
- Fig. 6 shows an example of the sequence of observation time windows according to a second acquisition step implemented by the measuring device of the invention, during which both events due to background noise and events belonging to a pulsed-type light radiation are acquired;

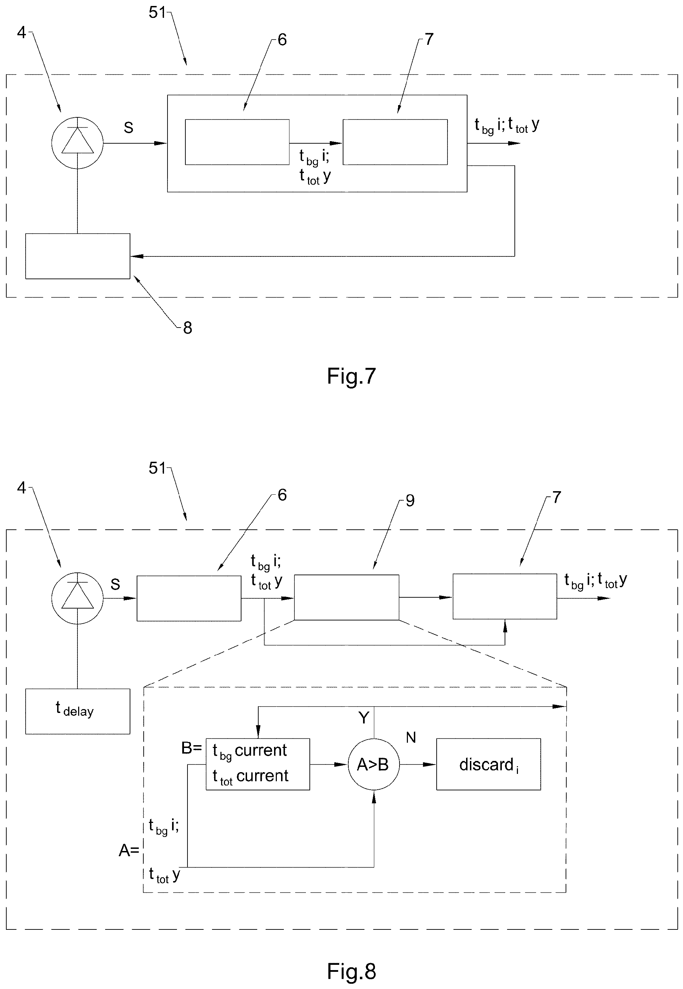

- Fig. 7 shows schematically a first embodiment of a control unit configured to control each of the photosensitive microcells belonging to the measuring device of the invention;
- Fig. 8 shows schematically a second embodiment of a control unit configured to control each of the photosensitive microcells belonging to the measuring device of the invention;

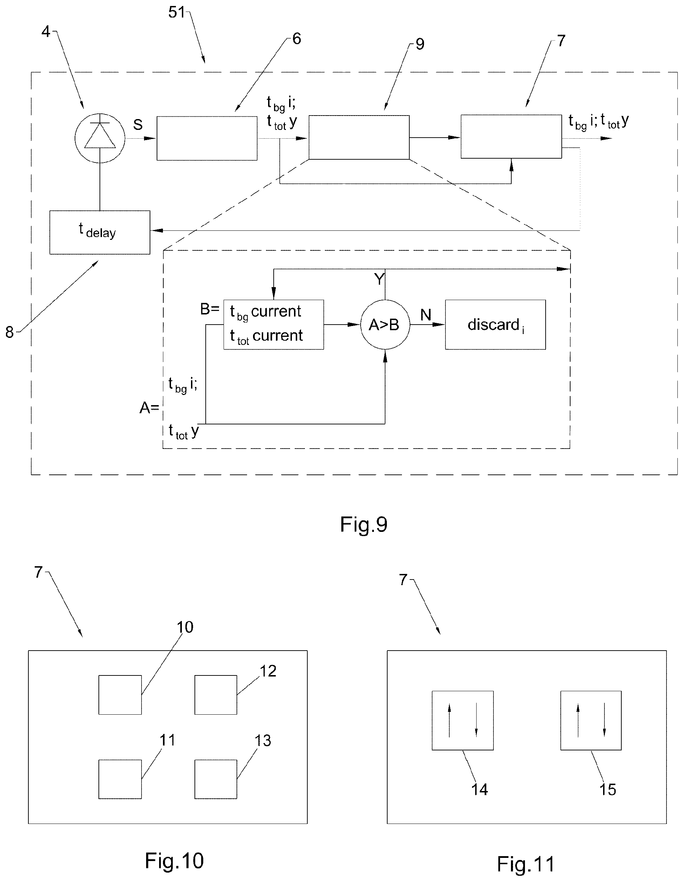

- Fig. 9 shows schematically a third embodiment of a control unit configured to control each of the photosensitive microcells belonging to the measuring device of the invention;
- Fig. 10 shows schematically a first embodiment of a processing block belonging to a control unit of the measuring device of the invention;
- Fig. 11 shows schematically a second embodiment of a processing block belonging to a control unit of the measuring device of the invention.

The device for measuring the distance d of a reference object **O,** according to the invention, is represented schematically in Fig. 4 wherein it is overall indicated by 1.

Such a measuring device 1 comprises emission means 2 for emitting a light radiation R in order to emit this radiation in the direction of the reference object **O.**

According to a preferred embodiment, such emission means are configured to emit a pulsed-type light radiation R with a predefined number of pulses.

The measuring device 1 of the invention further comprises receiving means 3, which, in turn, comprise an area **31** that is sensitive to the light radiation R back from the reference object **O.**

In particular, the sensitive area **31** is provided with one or more photosensitive microcells **4,** each of which is configured to generate an electrical signal **S** following the impact of at least a single photon F on its sensitive surface 41.

Preferably, each of these photosensitive microcells 4 comprises at least one single-photon device, even more preferably at least one SPAD (Single Photon Avalanche Diode).

It cannot be ruled out, however, that each photosensitive microcell **4** may comprise a different device, still based on single-photon technology, such as an SNSPD, however capable of measuring the arrival time of the radiation **R.**

Furthermore, the measuring device **1** of the invention comprises a processing group **5** configured to control the emission of light radiation **R** by the emission means **2** and, also, to control the activation of each of the photosensitive microcells **4.**

In this regard, it is important to point out that only photosensitive microcells **4** that are active are able to detect the incidence of a single photon **F.**

Therefore, only such active photosensitive microcells **4** are capable of generating a detection electrical signal **S.**

In contrast, the inactive photosensitive microcells **4** of this plurality of photosensitive microcells are unable to detect the incidence of a single photon **F** and thus to generate a detection electrical signal **S.**

According to the invention, this processing group **5** is configured to perform the measurement of the aforesaid distance **d** by sequentially implementing a series of steps described below.

First of all, as schematised in Fig. 5, said processing group **5** is configured to perform a first acquisition step which provides, for each of the photosensitive microcells **4,** to start a plurality **n** of consecutive observation time windows **i,** wherein **1 <= i <= n,** while keeping the emission means **2** deactivated. Each of these observation time windows **i** has a predefined duration **Tw.**

This duration **Tw** must be such as to include the maximum time of flight that is meant to be measured, i.e. it must be such as to include the maximum distance that is meant to be measured.

In particular, the first acquisition step provides, for each of the observation time windows **i,** to activate each photosensitive microcell **4** and to acquire the detection time $t_{bg}i$ of a single photon **F** on the same photosensitive microcell **4** starting from the opening of said observation time window **i.** For each of these observation time windows **i,** the detection time $t_{bg}i$ is validated only if it is greater than the detection time $t_{bg}i-1$ acquired and validated during the immediately preceding observation time window **i-1,** or rather, than the last detection time $t_{bg}i-1$ previously acquired and validated. Obviously, for the first observation time window **i = 1,** the first detection time $t_{bg}i$ (with i = 1) acquired is automatically validated.

For each photosensitive microcell **4,** the processing group **5** is configured to interrupt such first acquisition step when one of the observation time windows **i** is exhausted without the acquisition and validation of a detection time $t_{bg}i$ within the duration **Tw**.

Obviously, since during this first acquisition step the emission means **2** are deactivated, the aforesaid detection times $t_{bg}i$ relate to the incidence of photons **F** belonging exclusively to the background noise on the sensitive surfaces **41** of the various photosensitive microcells **4**.

At the end of said first acquisition step, the processing group **5** is configured, as schematised in Fig. 6, to perform a second acquisition step, which provides, for each of the photosensitive microcells **4**, to start a plurality **m** of consecutive observation time windows **y**, wherein **1 <= y <= m**, activating the emission means **2**.

Each of the observation time windows **y** has the aforesaid predefined duration **Tw**.

Obviously, even in this case, this duration **Tw** must be such as to include the maximum time of flight meant to be measured, i.e. it must be such as to include the maximum distance meant to be measured.

The second acquisition step provides, for each of the observation time windows **y**, to activate the photosensitive microcell **4** and to acquire the detection time $t_{tot}y$ of a single photon **F** on the same photosensitive microcell **4**.

For each observation time window **y**, the detection time $t_{tot}y$ is only validated if it is greater than the detection time $t_{tot}y-1$ acquired and validated for the immediately preceding observation time window **y-1**, or rather, than the last detection time $t_{tot}y-1$ previously acquired and validated.

In this case also, obviously for the first observation time window **y = 1**, the first detection time $t_{tot}y$ acquired is automatically validated.

For each photosensitive microcell **4**, the processing group **5** is configured to interrupt this second acquisition step when one of the observation time windows y is exhausted without the acquisition and validation of a detection time $t_{tot}y$ within the duration **Tw**.

In this case, unlike the first acquisition step, since in this second acquisition step the emission means **2** emit the light radiation **R**, the detection times $t_{tot}y$ are relative to the incidence, on the sensitive surfaces **41** of the various photosensitive microcells **4**, of photons **F** belonging both to such light radiation **R** and to the background noise.

Once said second acquisition step is also completed, the processing group **5** is configured to define the value of the time of flight **ToF** relative to such measurement for each of the photosensitive microcells **4**, based on the processing of the detection times $t_{tot}y$ acquired during the second acquisition step and the detection times $t_{bg}i$ acquired during the first acquisition step.

In particular, the value of the time of flight **ToF** relative to this measurement for each of the photosensitive microcells **4** is defined by taking into consideration the detection times $t_{tot}y$ acquired during the second acquisition step net of the detection times $t_{bg}i$ acquired during the first acquisition step.

Even more preferably but not necessarily, the processing group **5** is configured to define the aforementioned time of flight **ToF** value by calculating the average value of the detection times $t_{tot}y$ acquired during the second acquisition step minus the average value of the detection times $t_{bg}i$ acquired during the first acquisition step.

Advantageously, this procedure makes it possible to observe the incidence of photons **F** on the sensitive surface **41** of each of the photosensitive microcells **4** for the entire duration **Tw** of the observation time window, calculating an average time of the detection times $t_{bg}i$ and $t_{tot}y$ of the plurality of observation time windows **n** during the aforesaid first acquisition step and of the plurality of observation time windows **m** during the aforesaid second observation step.

Thus, in this way it is possible to obtain a linear behaviour of the single photosensitive microcells **4**.

Consequently, advantageously, it is possible to obtain a highly precise time of flight **ToF** value without the need, at the same time, to create histograms relating to the detection times of each photosensitive microcell **4** and without the need to process such histograms in order to obtain this precise time of flight **ToF** value.

According to a first preferred embodiment of the invention, for both the first acquisition step and the second acquisition step, for each of the photosensitive microcells **4**, the electronic group **5** is configured to:

a) activate the photosensitive microcell **4** at the instant of the beginning of the first observation time window **i = 1** and **y = 1**;

b) acquire a first detection time $t_{bg}i$ and $t_{tot}y$ determined by the impact of a single photon **F** on the photosensitive microcell **4**, consider said first detection time $t_{bg}i$ and $t_{tot}y$ as validated and wait for the first observation time window of duration **Tw** to be exhausted;

c) open a subsequent observation time window **i** and **y** and activate the photosensitive microcell **4** after a time interval $t_{delay}$ with respect to said opening of said observation time window **i** and **y**, said time interval $t_{delay}$ corresponding to the detection time $t_{bg}i-1$ and $t_{tot}y-1$ acquired and validated during the immediately preceding observation time window **i - 1** and **y - 1** or rather, said time interval $t_{delay}$ corresponding to the last detection time $t_{bg}i-1$ and $t_{tot}y-1$ previously acquired and validated;

d) acquire the detection time $t_{bg}i$ and $t_{tot}y$ determined by the impact of a single photon **F** on said photosensitive microcell **4**, consider said detection time $t_{bg}i$ and $t_{tot}y$ as validated and wait for the observation time window of duration **Tw** to be exhausted;

e) repeat steps c) and d) until no detection time $t_{bg}i$ and $t_{tot}y$ is acquired and validated for the entire duration **Tw** of the observation time window.

Advantageously, therefore, such a strategy according to the aforesaid first preferred embodiment, and in particular the activation of the photosensitive microcell **4** after a time interval $t_{delay}$ after the beginning of the observation time window, ensures that the sequence of acquired detection times $t_{bg}i$ and $t_{tot}y$ is ordered in ascending order within the duration **Tw**.

Advantageously, this strategy allows to perform the measurement even in the case of channel saturation.

Therefore, each detection time $t_{bg}i$ and $t_{tot}y$ of each observation time window **i** and **y** is considered automatically validated as necessarily having a value greater than the detection time $t_{bg}i$-1 and $t_{tot}y$-1 acquired and validated during the immediately preceding observation time window **i - 1** and **y - 1**, or rather such a detection time $t_{bg}i$ and $t_{tot}y$ of each observation time window **i** and **y** necessarily has a value greater than the last detection time $t_{bg}i$-1 and $t_{tot}y$-1 previously acquired and validated.

This consequently ensures, as mentioned above, the implementation of a linear operation of the photosensitive microcells **4**.

In order to implement such an operation method, preferably but not necessarily, the processing group **5** comprises a number of control units **51**, equal in number to the photosensitive microcells **4**, wherein, as is schematically observed in Fig. 7, each of the control units **51** is operatively connected to one of the photosensitive microcells **4**. In this case, each of the control units **51** comprises:

- a converter block **6,** comprising a TDC (Time to Digital Converter) or, alternatively, a TAC (Time to Analog Converter) configured to convert the detection time $t_{bg}i$ and $t_{tot}y$ into a digital or analogue signal;
- a processing block **7,** configured to implement the operating steps a) to e) described above;
- a digital delay block **8,** connected in feedback between the processing block **7** and the related photosensitive microcell **4,** so as to activate the aforesaid photosensitive microcell **4** after a time interval $t_{delay}$ from the beginning of the observation time window wherein $t_{delay}$ corresponds to the detection time $t_{bg}i$-1 and $t_{tot}y$-1 acquired and validated during the immediately preceding observation time window, or rather, such a time interval $t_{delay}$ corresponds to the last detection time $t_{bg}i$-1 and $t_{tot}y$-1 previously acquired and validated.

Alternatively, a second preferred embodiment of the invention may provide that, for both the first acquisition step and the second acquisition step, for each of the photosensitive microcells **4,** the processing group **5** is configured to:

a) activate the photosensitive microcell **4** at the instant of the beginning of the first observation time window **i = 1** and **y = 1**;

b) acquire a first detection time $t_{bg}i$ and $t_{tot}y$ determined by the impact of a single photon **F** on the photosensitive microcell **4** and wait for the first observation time window to be exhausted;

c) validate the first detection time $t_{bg}i$ and $t_{tot}y$ and store such first detection time $t_{bg}i$ and $t_{tot}y$ as the most recent detection time value $t_{bgcurrent}$ and $t_{totcurrent}$;

d) open a subsequent observation time window **i** and **y** and activate the photosensitive microcell **4** at the instant of the beginning of the subsequent observation time window **i** and **y**;

e) acquire the detection time $t_{bg}i$ and $t_{tot}y$ determined by the impact of a photon **F** on the photosensitive microcell **4** and wait for the closure of the subsequent observation time window;

f) check whether the detection time $t_{bg}i$ and $t_{tot}y$ acquired in step e) is greater than the value of the most recent detection time $t_{bgcurrent}$ and $t_{totcurrent}$ and, if so, validate the detection time $t_{bg}i$ and $t_{tot}y$ acquired in step e) and store said detection time $t_{bg}i$ and $t_{tot}y$ acquired in step e) as the most recent detection time value $t_{bgcurrent}$ and $t_{totcurrent}$; in the negative case, reject the detection time $t_{bg}i$ and $t_{tot}y$ acquired in step e);

g) repeat the steps d) to f) until no detection time $t_{bg}i$ and $t_{tot}y$ is acquired and validated for the entire duration **Tw** of the observation time window.

Advantageously, even according to said second alternative embodiment of the invention, such strategy, and in particular the fact of validating the detection time $t_{bg}i$ and $t_{tot}y$ acquired only in the case where it is greater than the most recent detection time value $t_{bgcurrent}$ and $t_{totcurrent}$, ensures that the sequence of detection times $t_{bg}i$ and $t_{tot}y$ acquired is ordered in ascending order within the duration **Tw**.

This consequently ensures, as mentioned above, the implementation of a linear operation of the photosensitive microcells **4**.

Furthermore, according to this second preferred embodiment of the invention, in order to implement said operation method, preferably but not necessarily, the processing group **5** comprises a number of control units **51** equal in number to the photosensitive microcells **4**, wherein, as schematically observed in Fig. 8, each of the control units **51** is operatively connected to one of the photosensitive microcells **4.** In particular, each of the control units **51** comprises:

- a converter block **6,** comprising a TDC (Time to Digital Converter) or, alternatively, a TAC (Time to Analog Converter) configured to convert the detection time $t_{bg}i$ and $t_{tot}y$ into a digital or analogue signal;
- a digital check block **9** to implement step f);
- a processing block **7** configured to implement the operating steps a) to e).

Furthermore, as an alternative to the aforesaid two preferred embodiments, a third embodiment could provide that, for both the first acquisition step and the second acquisition step, for each of the photosensitive microcells **4,** the processing group **5** is configured to:

a) activate the photosensitive microcell **4** at the instant of the beginning of the first observation time window $i = 1$ and $y = 1$;

b) acquire a first detection time $t_{bg}i$ and $t_{tot}y$ determined by the impact of a photon **F** on the photosensitive microcell **4** and wait for the first observation time window to be exhausted;

c) validate the first detection time $t_{bg}i$ and $t_{tot}y$ and store said first detection time $t_{bg}i$ and $t_{tot}y$ as the most recent detection time value $t_{bgcurrent}$ and $t_{totcurrent}$;

d) open a subsequent observation time window $i$ and $y$ and activate the photosensitive microcell **4** after a time interval $t_{delay}$ with respect to said opening of said observation time window $i$ and **y,** said time interval $t_{delay}$ corresponding to said most recent detection time $t_{bgcurrent}$ and $t_{totcurrent}$ reduced by a time difference **ST;**

e) acquire the detection time $t_{bg}i$ and $t_{tot}y$ determined by the impact of a photon on the photosensitive microcell **4** and wait for the observation time window to close;

f) check whether the detection time $t_{bg}i$ and $t_{tot}y$ acquired in step e) is greater than the value of the most recent detection time $t_{bgcurrent}$ and $t_{totcurrent}$ and, if so, validate the detection time $t_{bg}i$ and $t_{tot}y$ acquired in said step e) and store said detection time $t_{bg}i$ and $t_{tot}y$ acquired in step e) as the most recent detection time value $t_{bgcurrent}$ and $t_{totcurrent}$; in the negative case, reject said detection time $t_{bg}i$ and $t_{tot}y$ acquired in step e);

g) repeat steps c) to f) until no detection time $t_{bg}i$ and $t_{tot}y$ is acquired for the entire duration **Tw** of the observation time window.

Said third preferred embodiment of the invention represents an intermediate implementation between the first two preferred embodiments described above, with the advantage, compared to the first embodiment, given by the fact that the latter implementation does not require a highly precise delay block since the activation of the photosensitive microcell **4** is anticipated by the aforementioned time difference **ST,** wherein preferably **ST** is calculated, for the first acquisition step, equal to $\Delta t * (floor(t_{bgcurrent}/\Delta t))$ and, for the second acquisition step, equal to $\Delta t * (floor(t_{totcurrent}/\Delta t))$, with respect to the most recent detection times $t_{bgcurrent}$ and $t_{totcurrent}$, where $\Delta t$ is a predefined basic time difference and where the floor function() is the function that takes as input a real number x and outputs the maximum integer that is lower than or equal to x, and with the advantage, compared to the second preferred embodiment, of avoiding an excessive number of observation windows, whose detection times $t_{bg}i$ and $t_{tot}y$ are not validated as being less than the most recent detection times $t_{bgcurrent}$ and $t_{totcurrent}$.

It is not excluded that, according to different embodiments of the invention, the value of the time difference **ST** may be selected in a predefined and fixed manner.

In this case as well, however, this strategy, and in particular the activation of the photosensitive microcell **4** after a time interval $t_{delay}$ following the beginning of the observation time window, together with the fact of validating the detection time $t_{bg}i$ and $t_{tot}y$ acquired only if it is greater than the most recent detection time value $t_{bgcurrent}$ and $t_{totcurrent}$, ensures that the sequence of acquired detection times $t_{bg}i$ and $t_{tot}y$ is ordered in ascending order within the duration **Tw.**

This consequently ensures, as mentioned above, the implementation of a linear operation of the photosensitive microcells **4.**

In order to implement such an operation method, preferably but not necessarily, the processing group **5** comprises a number of control units **51** equal in number to the photosensitive microcells **4,** wherein, as schematically observed in Fig. 9, each of the control units **51** is operatively connected to one of the photosensitive microcells **4.** In this case, each of the control units **51** comprises:

- a converter block **6,** comprising a TDC (Time to Digital Converter) or, alternatively, a TAC (Time to Analog Converter) configured to convert the detection time $t_{bg}i$ and $t_{tot}y$ into a digital or analogue signal;
- a digital check block **9** to implement step f);
- a processing block **7** configured to implement the operating steps a) to e);
- a digital delay block **8,** connected in feedback between the processing block **7** and the related photosensitive microcell **4,** so as to activate the aforesaid photosensitive microcell **4** after a time interval $t_{delay}$ from the beginning of the observation time window wherein $t_{delay}$ corresponds to said most recent detection time $t_{bgcurrent}$ and $t_{totcurrent}$ reduced by a time difference **ST,** where preferably **ST** is calculated, for the first acquisition step, equal to $\Delta t$ * (floor($t_{bgcurrent}/\Delta t$)) and, for the second acquisition step, equal to $\Delta t$ * (floor($t_{totcurrent}/\Delta t$)), with respect to the most recent detection times $t_{bgcurrent}$ and $t_{totcurrent}$, where $\Delta t$ is a predefined basic time difference and where the floor function() is the function that takes as input a real number x and outputs the maximum integer lower than or equal to x.

Even more in detail, for each of the three embodiments just set forth, as represented schematically in Fig. 10, the processing block **7** could be composed of:

- a first photon counter **10** to count the number of photons $N_{bg}$ detected and whose detection times $t_{bg}i$ were validated during the first acquisition step;
- a second photon counter **11** to count the number of photons $N_{tot}$ detected and whose detection times $t_{tot}y$ were validated during the second acquisition step;
- a first detection time accumulator **12** for storing the detection times $t_{bg}i$ acquired and validated during the first acquisition step;
- a second detection time accumulator **13** for storing the detection times $t_{tot}y$ acquired and validated during the second acquisition step.

Alternatively, as represented in Fig. 11, for each of the three embodiments just set forth, the processing block **7** could consist of:

- an up/down-type photon counter **14** to count the number of photons $N_{bg}$ detected and whose detection times $t_{bg}i$ were validated during the first acquisition step and the number of photons $N_{tot}$ detected and whose detection times $t_{tot}y$ were validated during the second acquisition step;
- an up/down-type detection time accumulator **15** for storing the detection times $t_{bg}i$ acquired and validated during the first acquisition step and the detection times $t_{tot}y$ acquired and validated during the second acquisition step.

As for the step of determining the time of flight **ToF** value for each of the photosensitive microcells **4,** preferably but not necessarily, it is implemented according to the formula:

$$\text{ToF} = \frac{\bar{t}tot \cdot Ntot - \bar{t}bg \cdot Nbg}{Ntot - Nbg}$$

wherein $t_{tot}$ is the average of the detection times $t_{tot}y$ acquired and validated during the second acquisition step, $N_{tot}$ is the number of photons detected and whose detection times $t_{tot}y$ were validated during such second acquisition step, $t_{bg}$ is the average of the detection times $t_{bg}i$ acquired and validated during the first acquisition step and $N_{bg}$ is the number of detected photons and whose detection times $t_{bg}i$ were validated during the first acquisition step.

According to a different embodiment, alternative to the embodiment described above, the value of the time of flight **ToF,** for each of the photosensitive microcells **4,** is determined by the formula:

$$\text{ToF} = \frac{\sum_{acq} \sum_{y=1}^{m} ttoty - \sum_{acq} \sum_{i=1}^{n} tbgi}{\sum_{acq} Ntot - \sum_{acq} Nbg}$$

wherein $\sum_{i=1}^{n}$ and $\sum_{y=1}^{m}$ represent, respectively, the summation of the detection times $t_{bg}i$ and $t_{tot}y$ acquired and validated during the first acquisition step and during the second acquisition step, while $\sum_{acq}$ represents the summation of the summations of the detection times $t_{bg}i$ and $t_{tot}y$ and the number of photons $N_{bg}$ and $N_{tot}$ detected and validated respectively during a plurality of first acquisition steps performed consecutively and during a plurality of second acquisition steps performed consecutively.

Based on what has been described, it is therefore understood that the measuring device of the invention achieves all the intended objects.

In particular, the object to realise a measuring device whose sensitive area comprises a plurality of photosensitive microcells capable of giving a linear response following the incidence of light radiation on the same photosensitive microcells is achieved.

Consequently, the object to realise a measuring device capable of providing a precise value of the distance of a reference object, without the need to store the data acquired during the plurality of observations of said light radiation, in order to create the aforesaid histograms, and consequently without the need to computationally perform costly processing of said histograms is also achieved. Thus, the object to realise a measuring device that allows to obtain a high accuracy of the distance value of a reference object and, at the same time, allows for a reduced and simpler calculation and storage capacity, compared to the known measuring devices configured to implement the storage and processing of the aforementioned histograms, is also achieved.

Therefore, the object to realise a measuring device that allows to obtain the accuracy of the value of the aforementioned distance and at the same time that is smaller and cheaper than devices of the prior art that implement such storage and processing of histograms is achieved.

Finally, the object to realise a measuring device that allows to overcome the saturation limit of single-photon microcells, enabling measurements to be made even in the presence of very intense background noise, is also achieved.

**Claims**

1.  Device for measuring (1) the distance (d) of a reference object (O), of the type comprising:

    - emission means (2) for emitting a light radiation (R) in the direction of said reference object (O), said emission means (2) being configured to emit said pulsed-type light radiation (R);
    - receiving means (3) comprising an area (31) sensitive to said light radiation (R) back from said reference object (O), said sensitive area (31) being provided with one or more photosensitive microcells (4), each of said photosensitive microcells (4) being configured to generate an electrical signal (S) following the impact of one single photon (F) on its sensitive surface (41);
    - a processing group (5) configured to control the emission of said light radiation (R) by said emission means (2) and to control the activation of each of said photosensitive microcells (4);

    wherein said processing group (5) is configured to perform said measurement by implementing in sequence:

    - a first acquisition step which provides, for each of said photosensitive microcells (4), to start a plurality (n) of consecutive observation time windows (i) while keeping deactivated said emission means (2), each of said observation time windows (i) having a predefined duration (Tw) such as to comprise the maximum time of flight, that is meant to be measured, said first acquisition step providing for each of said observation time windows (i) to activate said photosensitive microcell (4) and to acquire the detection time ($t_{bg}i$) of a single photon (F) on said photosensitive microcell (4) starting from the opening of said observation time window (i);
    - a second acquisition step which provides, for each of said photosensitive microcells (4), to start a plurality (m) of consecutive observation time windows (y) by activating said emission means (2), each of said observation time windows (y) having said predefined duration (Tw), said second acquisition step providing for each of said observation time windows (y) to activate said photosensitive microcell (4) and to acquire the detection time ($t_{tot}y$) of a single photon (F) on said photosensitive microcell (4) starting from the opening of said observation time window (y);
    - a step of defining the time of flight value of said measurement for each of said photosensitive microcells (4), based on the processing of the detection times ($t_{tot}y$) acquired in said second acquisition step and the detection times ($t_{bg}i$) acquired in said first acquisition step;

    **characterised in that:**

    - said first acquisition step provides for each of said observation time windows (i) that said detection time ($t_{bg}i$) is validated only in the event that it is greater than the last detection time ($t_{bg}i$-1) previously acquired and validated, said first acquisition step being interrupted when one of said observation time windows (i) is exhausted without the acquisition and validation of a detection time ($t_{bg}i$);
    - said second acquisition step provides for each of said observation time windows (y) that said detection time ($t_{tot}y$) is validated only in the event that it is greater than the last detection time ($t_{tot}y$-1) previously acquired and validated, said second acquisition step being interrupted when one of said observation time windows (y) is exhausted without the acquisition and validation of a detection time ($t_{tot}y$);
    - said step of defining the time of flight value of said measurement for each of said photosensitive microcells (4) is based on the processing of the detection times ($t_{tot}y$) acquired and validated in said second acquisition step and the detection times ($t_{bg}i$) acquired and validated in said first acquisition step.

2.  Measuring device (1) according to claim 1, wherein said step of defining said time of flight value provides to calculate the average value of the detection times ($t_{tot}y$) acquired and validated in said second acquisition step minus the average value of the detection times ($t_{bg}i$) acquired and validated in said first acquisition step.

3. Measuring device (1) according to claim 2, wherein said processing group (5) is configured to define the value of said time of flight for each of said photosensitive microcells (4) by the formula:

$$\text{ToF} = \frac{\bar{t}tot \cdot \text{Ntot} - \bar{t}bg \cdot \text{Nbg}}{\text{Ntot} - \text{Nbg}}$$

wherein $t_{tot}$ is the average of the detection times ($t_{tot}y$) acquired and validated during said second acquisition step, **$N_{tot}$** is the number of photons detected and whose detection times ($t_{tot}y$) were validated during said second acquisition step, $t_{bg}$ is the average of the detection times ($t_{bg}i$) acquired and validated during said first acquisition step, **$N_{bg}$** is the number of photons detected and whose detection times ($t_{bg}i$) were validated during said first acquisition step.

4. Measuring device (1) according to claim 2, wherein said processing group (5) is configured to define said value of said time of flight for each of said photosensitive microcells (4) by the formula

$$\text{ToF} = \frac{\sum_{acq} \sum_{y=1}^{m} ttoty - \sum_{acq} \sum_{i=1}^{n} tbgi}{\sum_{acq} Ntot - \sum_{acq} Nbg}$$

wherein $\sum_{i=1}^{n}$ and $\sum_{y=1}^{m}$ represent respectively the summation of the detection times ($t_{bg}i$, $t_{tot}y$) acquired and validated during said first acquisition step and during said second acquisition step, and $\sum_{acq}$ represents the summation of said summations $\sum_{i=1}^{n}$ and $\sum_{y=1}^{m}$ of the detection times ($t_{bg}i$, $t_{tot}y$) and of the number of photons ($N_{bg}$) and of the number of detected photons ($N_{tot}$) and whose detection times ($t_{bg}i$, $t_{tot}y$) were respectively validated while performing a plurality of first acquisition steps performed subsequently and while performing a plurality of second acquisition steps performed subsequently.

5. Measuring device (1) according to any one of the preceding claims, wherein for both said first acquisition step and said second acquisition step, for each of said photosensitive microcells (4), said processing group (5) is configured to:

 a) activate said photosensitive microcell (5) at the instant of the beginning of the first observation time window;
 b) acquire a first detection time ($t_{bg}i$, $t_{tot}y$) determined by the impact of a single photon (F) on said photosensitive microcell (4), consider said first detection time ($t_{bg}i$, $t_{tot}y$) as valid and wait for said first observation time window to be exhausted;
 c) open a subsequent observation time window and activate said photosensitive microcell (4) after a time interval ($t_{delay}$) with respect to said opening of said observation time window (i, y), said time interval ($t_{delay}$) corresponding to the detection time ($t_{bg}i$-1, $t_{tot}y$-1) acquired and validated during the immediately preceding observation time window;
 d) acquire the detection time ($t_{bg}i$, $t_{tot}y$) determined by the impact of a single photon (F) on said photosensitive microcell (4), consider said detection time ($t_{bg}i$, $t_{tot}y$) as valid and wait for said observation time window to be exhausted;
 e) repeat steps c) and d) until no detection time ($t_{bg}i$, $t_{tot}y$) is acquired and validated for the entire duration (Tw) of the observation time window.

6. Measuring device (1) according to claim 5, wherein said processing group (5) comprises a number of control units (51) equal to the number of said photosensitive microcells (4), wherein each of said control units (51) is operatively connected to one of said photosensitive microcells (4) and wherein each of said control units (51) comprises:

 - a converter block (6), comprising a TDC, Time to Digital Converter, or, alternatively, a TAC, Time to Analog Converter, said converter block (6) being configured to convert said detection time ($t_{bg}i$, $t_{tot}y$) into a digital or analogue signal;
 - a processing block (7) configured to implement the operating steps a) to e);
 - a digital delay block (8), connected in feedback between said processing block (7) and said photosensitive microcell (4), so as to activate said photosensitive microcell (4) after a time interval ($t_{delay}$) from the beginning of the observation time window, said time interval ($t_{delay}$) corresponding to the detection time ($t_{bg}i-1$, $t_{tot}y-1$) acquired and validated during the immediately preceding observation time window.

7. Measuring device (1) according to any one of claims 1 to 4, wherein for both said first acquisition step and said second acquisition step, for each of said photosensitive microcells (4), said processing group (5) is configured to:

   a) activate said photosensitive microcell (4) at the instant of the beginning of the first observation time window;
   b) acquire a first detection time ($t_{bg}i$, $t_{tot}y$) determined by the impact of a single photon (F) on said photosensitive microcell (4) and wait for said first observation time window to be exhausted;
   c) validate said first detection time ($t_{bg}i$, $t_{tot}y$) and store said first detection time ($t_{bg}i$, $t_{tot}y$) as the most recent detection time value ($t_{bgcurrent}$, $t_{totcurrent}$);
   d) open a subsequent observation time window and activate said photosensitive microcell (4) at the instant of the beginning of said subsequent observation time window;
   e) acquire the detection time ($t_{bg}i$, $t_{tot}y$) determined by the impact of a single photon (F) on said photosensitive microcell (4) and wait for said subsequent observation time window to be exhausted;
   f) check whether said detection time ($t_{bg}i$, $t_{tot}y$) acquired in step e) is greater than said most recent detection time value ($t_{bgcurrent}$, $t_{totcurrent}$) and, if so, validate said detection time ($t_{bg}i$, $t_{tot}y$) acquired in said step e) and store said detection time ($t_{bg}i$, $t_{tot}y$) acquired in said step e) as the most recent detection time value ($t_{bgcurrent}$, $t_{totcurrent}$); in the negative case reject said detection time ($t_{bg}i$, $t_{tot}y$) acquired in step e);
   g) repeat steps d) to f) until no detection time ($t_{bg}i$, $t_{tot}y$) is acquired and validated for the entire duration (Tw) of the observation time window.

8. Measuring device (1) according to claim 7, wherein said processing group (5) comprises a number of control units (51) equal to the number of said photosensitive microcells (4), wherein each of said control units (51) is operatively connected to one of said photosensitive microcells (4) and wherein each of said control units (51) comprises:

   - a converter block (6), comprising a TDC or alternatively, a TAC, said converter block (6) being configured to convert said detection time ($t_{bg}i$, $t_{tot}y$) into a digital or analogue signal;
   - a digital check block (9) to implement said step f);
   - a processing block (7) configured to implement the operating steps a) to e).

9. Measuring device (1) according to any one of claims 1 to 4, wherein for both said first acquisition step and said second acquisition step, for each of said photosensitive microcells (4), said processing group (5) is configured to:

   a) activate said photosensitive microcell (4) at the instant of the beginning of the first observation time window;
   b) acquire a first detection time ($t_{bg}i$, $t_{tot}y$) determined by the impact of a single photon (F) on said photosensitive microcell (4) and wait for said first observation time window to be exhausted;
   c) validate said first detection time ($t_{bg}i$, $t_{tot}y$) and store said first detection time ($t_{bg}i$, $t_{tot}y$) as the most recent detection time value ($t_{bgcurrent}$, $t_{totcurrent}$);
   d) open a subsequent observation time window and activate said photosensitive microcell (4) after a time interval ($t_{delay}$) from the beginning of the observation time window, said time interval ($t_{delay}$) corresponding to said most recent detection time ($t_{bgcurrent}$, $t_{totcurrent}$) reduced by a time difference (ST);
   e) acquire the detection time ($t_{bg}i$, $t_{tot}y$) determined by the impact of a single photon (F) on said photosensitive microcell (4) and wait for said observation time window to be exhausted;
   f) check whether said detection time ($t_{bg}i$, $t_{tot}y$) acquired in step e) is greater than said most recent detection time value ($t_{bgcurrent}$, $t_{totcurrent}$) and, if so, validate said detection time ($t_{bg}i$, $t_{tot}y$) acquired in said step e) and store said detection time ($t_{bg}i$, $t_{tot}y$) acquired in said step e) as the most recent detection time value ($t_{bgcurrent}$, $t_{totcurrent}$); in the negative case reject said detection time ($t_{bg}i$, $t_{tot}y$) acquired in step e);
   g) repeat the steps c) to f) until no detection time ($t_{bg}i$, $t_{tot}y$) is acquired for the entire duration (Tw) of the observation time window.

10. Measuring device (1) according to claim 9, wherein said processing group (5) comprises a number of control units (51) equal to the number of said photosensitive microcells (4), wherein each of said control units (51) is operatively connected to one of said photosensitive microcells (4) and wherein each of said control units (51) comprises:

   - a converter block (6), comprising a TDC or alternatively, a TAC, said converter block (6) being configured to convert said detection time ($t_{bg}i$, $t_{tot}y$) into a digital or analogue signal;
   - a digital check block (9) to implement said step f);

- a processing block (7) configured to implement the operating steps a) to e);
- a digital delay block (8), connected in feedback between said processing block (7) and said photosensitive microcell (4), so as to activate said photosensitive microcell (4) after a time interval ($t_{delay}$) from the beginning of the observation time window, said time interval ($t_{delay}$) corresponding to said most recent detection time ($t_{bgcurrent}$, $t_{totcurrent}$) reduced by one time difference (ST).

11. Measuring device (1) according to any one of claims 5 to 10, in combination with claim 3 or claim 4, wherein said processing block comprises:

- a first photon counter (10) to count said number of detected photons ($N_{bg}$) and whose detection times ($t_{bg}i$) were validated during said first acquisition step;
- a second photon counter (11) to count said number of photons ($N_{tot}$) and whose detection times ($t_{tot}y$) were validated during said second acquisition step;
- a first detection time accumulator (12) for storing said detection times ($t_{bg}i$) acquired and validated during said first acquisition step;
- a second detection time accumulator (13) for storing said detection times ($t_{tot}y$) acquired and validated during said second acquisition step.

12. Measuring device (1) according to any one of claims 5 to 10, in combination with claim 3 or claim 4, wherein said processing block (5) comprises:

- an up/down-type photon counter (14) to count the number of photons ($N_{bg}$, $N_{tot}$) detected and whose detection times ($t_{bg}i$, $t_{tot}y$) were validated during said first acquisition step and during said second acquisition step;
- an up/down-type detection time accumulator (15) for storing the detection times ($t_{bg}i$, $t_{tot}y$) acquired and validated during said first acquisition step and during said second acquisition step.

13. Measuring device (1) according to any one of claims 1 to 4, wherein said emission means (2) are configured to emit a pulsed-type light radiation (R) with a predetermined number of pulses for each of said observation time windows during said second acquisition step.


**Patentansprüche**

1. Vorrichtung zum Messen (1) der Entfernung (d) eines Referenzobjekts (O), von der Art, die Folgendes umfasst:

- Emissionsmittel (2) zum Emittieren einer Lichtstrahlung (R) in Richtung des Referenzobjekts (O), wobei die Emissionsmittel (2) konfiguriert sind, um die pulsartige Lichtstrahlung (R) zu emittieren;
- Empfangsmittel (3), die einen Bereich (31) umfassen, der für die von dem Referenzobjekt (O) zurückkommende Lichtstrahlung (R) empfindlich ist, wobei der empfindliche Bereich (31) mit einer oder mehreren lichtempfindlichen Mikrozellen (4) versehen ist, wobei jede der lichtempfindlichen Mikrozellen (4) konfiguriert ist, um ein elektrisches Signal (S) nach dem Auftreffen eines einzelnen Photons (F) auf seine empfindliche Oberfläche (41) zu erzeugen;
- eine Verarbeitungsgruppe (5), die konfiguriert ist, um die Emission der Lichtstrahlung (R) durch die Emissionsmittel (2) zu steuern und die Aktivierung jeder der lichtempfindlichen Mikrozellen (4) zu steuern;

wobei die Verarbeitungsgruppe (5) so konfiguriert ist, dass sie die Messung durch sequenzielle Implementierung durchführt:

- einen ersten Erfassungsschritt, der für jede der lichtempfindlichen Mikrozellen (4) vorsieht, eine Vielzahl (n) aufeinanderfolgender Beobachtungszeitfenster (i) zu starten, während die Emissionsmittel (2) deaktiviert behalten werden, wobei jedes der Beobachtungszeitfenster (i) eine vordefinierte Dauer (Tw) aufweist, so dass es die maximale Flugzeit, ToF, umfasst, die gemessen werden soll, wobei der erste Erfassungsschritt vorsieht, dass jedes der Beobachtungszeitfenster (i) die lichtempfindliche Mikrozelle (4) aktiviert und die Detektionszeit ($t_{bg}i$) eines einzelnen Photons (F) auf der lichtempfindlichen Mikrozelle (4) beginnend mit dem Öffnen des Beobachtungszeitfensters (i) erfasst;
- einen zweiten Erfassungsschritt, der für jede der lichtempfindlichen Mikrozellen (4) vorsieht, eine Vielzahl (m) von aufeinanderfolgenden Beobachtungszeitfenstern (y) durch Aktivieren der Emissionsmittel (2) zu starten, wobei jedes der Beobachtungszeitfenster (y) die vordefinierte Dauer (Tw) aufweist, wobei der zweite Erfassungsschritt vorsieht, dass jedes der Beobachtungszeitfenster (y) die lichtempfindliche Mikrozelle (4) aktiviert und die Detektionszeit ($t_{tot}$y) eines einzelnen Photons (F) auf der lichtempfindlichen Mikrozelle (4) beginnend mit dem Öffnen des Beobachtungszeitfensters (y) erfasst;
- einen Schritt zum Definieren des Flugzeitwerts der Messung für jede der lichtempfindlichen Mikrozellen (4) auf Grundlage der Verarbeitung der in dem zweiten Erfassungsschritt erfassten Detektionszeiten ($t_{tot}$y) und der in dem ersten Erfassungsschritt erfassten Detektionszeiten ($t_{bg}$i);

**dadurch gekennzeichnet, dass:**

- der erste Erfassungsschritt für jedes der Beobachtungszeitfenster (i) vorsieht, dass die Detektionszeit ($t_{bg}$i) nur für den Fall validiert wird, dass sie größer als die zuletzt erfasste und validierte Detektionszeit ($t_{bg}$i-1) ist, wobei der erste Erfassungsschritt unterbrochen wird, wenn eines der Beobachtungszeitfenster (i) ohne die Erfassung und Validierung einer Detektionszeit ($t_{bg}$i) erschöpft wird;
- der zweite Erfassungsschritt für jedes der Beobachtungszeitfenster (y) vorsieht, dass die Detektionszeit ($t_{tot}$y) nur in dem Fall validiert wird, dass sie größer als die zuletzt erfasste und validierte Detektionszeit ($t_{tot}$y-1) ist, wobei der zweite Erfassungsschritt unterbrochen wird, wenn eines der Beobachtungszeitfenster (y) ohne die Erfassung und Validierung einer Detektionszeit ($t_{tot}$y) erschöpft wird;
- der Schritt zum Definieren des Flugzeitwerts der Messung für jede der lichtempfindlichen Mikrozellen (4) auf der Verarbeitung der in dem zweiten Erfassungsschritt erfassten und validierten Detektionszeiten ($t_{tot}$y) und der in dem ersten Erfassungsschritt erfassten und validierten Detektionszeiten ($t_{bg}$i) basiert.

2. Messvorrichtung (1) nach Anspruch 1, wobei der Schritt zum Definieren des Flugzeitwerts das Berechnen des Durchschnittswerts der in dem zweiten Erfassungsschritt erfassten und validierten Detektionszeiten ($t_{tot}$y) abzüglich des Durchschnittswerts der in dem ersten Erfassungsschritt erfassten und validierten Detektionszeiten ($t_{bg}$i) vorsieht.

3. Messvorrichtung (1) nach Anspruch 2, wobei die Verarbeitungsgruppe (5) konfiguriert ist, um den Wert der Flugzeit für jede der lichtempfindlichen Mikrozellen (4) durch die Formel

$$\mathrm{ToF} \;=\; \frac{\bar{t}\mathrm{tot} \cdot \mathrm{Ntot} \;-\; \bar{t}\mathrm{bg} \cdot \mathrm{Nbg}}{\mathrm{Ntot} \;-\; \mathrm{Nbg}}$$

zu definieren, wobei $\bar{t}_{tot}$ der Durchschnitt der Detektionszeiten ($t_{tot}$y) ist, die während des zweiten Erfassungsschritts erfasst und validiert wurden, $N_{tot}$ die Anzahl der detektierten Photonen ist und deren Detektionszeiten ($t_{tot}$y) während des zweiten Erfassungsschritts validiert wurden, $\bar{t}_{bg}$ der Durchschnitt der Detektionszeiten ($t_{bg}$i) ist, die während des ersten Erfassungsschritts erfasst und validiert wurden, $N_{bg}$ die Anzahl der detektierten Photonen ist und deren Detektionszeiten ($t_{bg}$i) während des ersten Erfassungsschritts validiert wurden.

4. Messvorrichtung (1) nach Anspruch 2, wobei die Verarbeitungsgruppe (5) konfiguriert ist, um den Wert der Flugzeit für jede der lichtempfindlichen Mikrozellen (4) durch die Formel

$$\mathrm{ToF} \;=\; \frac{\sum_{acq} \sum_{y=1}^{m} \mathrm{ttot}y \;-\; \sum_{acq} \sum_{i=1}^{n} \mathrm{tbg}i}{\sum_{acq} \mathrm{Ntot} \;-\; \sum_{acq} \mathrm{Nbg}}$$

zu definieren, wobei $\sum_{i=1}^{n}$ und $\sum_{y=1}^{m}$ jeweils die Summation der während des ersten Erfassungsschritts und während des zweiten Erfassungsschritts erfassten und validierten Detektionszeiten ($t_{bg}$i, $t_{tot}$y) darstellen und $\sum_{acq}$ die Summation der Summationen $\sum_{i=1}^{n}$ und $\sum_{y=1}^{m}$ der Detektionszeiten ($t_{bg}$i, $t_{tot}$y) und der Anzahl der Photonen ($N_{bg}$) und der Anzahl der detektierten Photonen ($N_{tot}$) darstellt und deren Detektionszeiten ($t_{bg}$i, $t_{tot}$y) jeweils validiert wurden, während eine Vielzahl von ersten Erfassungsschritten durchgeführt wurde, die nachfolgend durchgeführt wurden, und während eine Vielzahl von zweiten Erfassungsschritten durchgeführt wurde, die nachfolgend durchgeführt wurden.

5. Messvorrichtung (1) nach einem der vorhergehenden Ansprüche, wobei die Verarbeitungsgruppe (5) sowohl für den ersten Erfassungsschritt als auch für den zweiten Erfassungsschritt für jede der lichtempfindlichen Mikrozellen (4) zu Folgendem konfiguriert ist:

a) Aktivieren der lichtempfindlichen Mikrozelle (5) zum Zeitpunkt des Beginns des ersten Beobachtungszeitfensters;

b) Erfassen einer ersten Detektionszeit ($t_{bg}i$, $t_{tot}y$), die durch das Auftreffen eines einzelnen Photons (F) auf die lichtempfindliche Mikrozelle (4) bestimmt wird, Betrachten der ersten Detektionszeit ($t_{bg}i$, $t_{tot}y$) als gültig und Warten, bis das erste Beobachtungszeitfenster erschöpft ist;

c) Öffnen eines nachfolgenden Beobachtungszeitfensters und Aktivieren der lichtempfindlichen Mikrozelle (4) nach einem Zeitintervall ($t_{delay}$) in Bezug auf das Öffnen des Beobachtungszeitfensters (i, y), wobei das Zeitintervall ($t_{delay}$) der Detektionszeit ($t_{bg}i$-1, $t_{tot}y$-1) entspricht, die während des unmittelbar vorhergehenden Beobachtungszeitfensters erfasst und validiert wurde;

d) Erfassen der Detektionszeit ($t_{bg}i$, $t_{tot}y$), die durch das Auftreffen eines einzelnen Photons (F) auf die lichtempfindliche Mikrozelle (4) bestimmt wird, Betrachten der Detektionszeit ($t_{bg}i$, $t_{tot}y$) als gültig und Warten, bis das Beobachtungszeitfenster erschöpft ist;

e) Wiederholen der Schritte c) und d), bis keine Detektionszeit ($t_{bg}i$, $t_{tot}y$) für die gesamte Dauer (Tw) des Beobachtungszeitfensters erfasst und validiert wird.

6. Messvorrichtung (1) nach Anspruch 5, wobei die Verarbeitungsgruppe (5) eine Anzahl von Steuereinheiten (51) umfasst, die gleich der Anzahl von lichtempfindlichen Mikrozellen (4) ist, wobei jede der Steuereinheiten (51) betriebswirksam mit einer der lichtempfindlichen Mikrozellen (4) verbunden ist und wobei jede der Steuereinheiten (51) umfasst:

- einen Wandlerblock (6), der einen TDC-Zeit-Digital-Wandler oder alternativ einen TAC-Zeit-Analog-Wandler umfasst, wobei der Wandlerblock (6) konfiguriert ist, um die Detektionszeit ($t_{bg}i$, $t_{tot}y$) in ein digitales oder analoges Signal umzuwandeln;

- einen Verarbeitungsblock (7), der konfiguriert ist, um die Betriebsschritte a) bis e) zu implementieren;

- einen digitalen Verzögerungsblock (8), der rückgekoppelt zwischen dem Verarbeitungsblock (7) und der lichtempfindlichen Mikrozelle (4) geschaltet ist, um die lichtempfindliche Mikrozelle (4) nach einem Zeitintervall ($t_{delay}$) ab dem Beginn des Beobachtungszeitfensters zu aktivieren, wobei das Zeitintervall ($t_{delay}$) der Detektionszeit ($t_{bg}i$-1, $t_{tot}y$-1) entspricht, die während des unmittelbar vorhergehenden Beobachtungszeitfensters erfasst und validiert wurde.

7. Messvorrichtung (1) nach einem der Ansprüche 1 bis 4, wobei die Verarbeitungsgruppe (5) sowohl für den ersten Erfassungsschritt als auch für den zweiten Erfassungsschritt für jede der lichtempfindlichen Mikrozellen (4) zu Folgendem konfiguriert ist:

a) Aktivieren der lichtempfindlichen Mikrozelle (4) zum Zeitpunkt des Beginns des ersten Beobachtungszeitfensters;

b) Erfassen einer ersten Detektionszeit ($t_{bg}i$, $t_{tot}y$), die durch das Auftreffen eines einzelnen Photons (F) auf die lichtempfindliche Mikrozelle (4) bestimmt wird, und Warten, bis das erste Beobachtungszeitfenster erschöpft ist;

c) Validieren der ersten Detektionszeit ($t_{bg}i$, $t_{tot}y$) und Speichern der ersten Detektionszeit ($t_{bg}i$, $t_{tot}y$) als den jüngsten Detektionszeitwert ($t_{bgcurrent}$, $t_{totcurrent}$);

d) Öffnen eines nachfolgenden Beobachtungszeitfensters und Aktivieren der lichtempfindlichen Mikrozelle (4) zum Zeitpunkt des Beginns des nachfolgenden Beobachtungszeitfensters;

e) Erfassen der Detektionszeit ($t_{bg}i$, $t_{tot}y$), die durch das Auftreffen eines einzelnen Photons (F) auf die lichtempfindliche Mikrozelle (4) bestimmt wird, und Warten, bis das nachfolgende Beobachtungszeitfenster erschöpft ist;

f) Überprüfen, ob die in Schritt e) erfasste Detektionszeit ($t_{bg}i$, $t_{tot}y$) größer als der jüngste Detektionszeitwert ($t_{bgcurrent}$, $t_{totcurrent}$) ist, und wenn ja, Validieren der in Schritt e) erfassten Detektionszeit ($t_{bg}i$, $t_{tot}y$) und Speichern der in Schritt e) erfassten Detektionszeit ($t_{bg}i$, $t_{tot}y$) als den jüngsten Detektionszeitwert ($t_{bgcurrent}$, $t_{totcurrent}$); im negativen Fall, Ablehnen der in Schritt e) erfasste Detektionszeit ($t_{bg}i$, $t_{tot}y$);

g) Wiederholen der Schritte d) bis f), bis keine Detektionszeit ($t_{bg}i$, $t_{tot}y$) für die gesamte Dauer (Tw) des Beobachtungszeitfensters erfasst und validiert wird.

8. Messvorrichtung (1) nach Anspruch 7, wobei die Verarbeitungsgruppe (5) eine Anzahl von Steuereinheiten (51) umfasst, die gleich der Anzahl von lichtempfindlichen Mikrozellen (4) ist, wobei jede der Steuereinheiten (51) betriebswirksam mit einer der lichtempfindlichen Mikrozellen (4) verbunden ist und wobei jede der Steuereinheiten (51) umfasst:

- einen Wandlerblock (6), der einen TDC oder alternativ einen TAC umfasst, wobei der Wandlerblock (6) konfiguriert ist, um die Detektionszeit ($t_{bg}i$, $t_{tot}y$) in ein digitales oder analoges Signal umzuwandeln;
- einen digitalen Prüfblock (9) zum Implementieren des Schritts f);
- einen Verarbeitungsblock (7), der konfiguriert ist, um die Betriebsschritte a) bis e) zu implementieren.

9. Messvorrichtung (1) nach einem der Ansprüche 1 bis 4, wobei die Verarbeitungsgruppe (5) sowohl für den ersten Erfassungsschritt als auch für den zweiten Erfassungsschritt für jede der lichtempfindlichen Mikrozellen (4) zu Folgendem konfiguriert ist:

a) Aktivieren der lichtempfindlichen Mikrozelle (4) zum Zeitpunkt des Beginns des ersten Beobachtungszeitfensters;
b) Erfassen einer ersten Detektionszeit ($t_{bg}i$, $t_{tot}y$), die durch das Auftreffen eines einzelnen Photons (F) auf die lichtempfindliche Mikrozelle (4) bestimmt wird, und Warten, bis das erste Beobachtungszeitfenster erschöpft ist;
c) Validieren der ersten Detektionszeit ($t_{bg}i$, $t_{tot}y$) und Speichern der ersten Detektionszeit ($t_{bg}i$, $t_{tot}y$) als den jüngsten Detektionszeitwert ($t_{bgcurrent}$, $t_{totcurrent}$);
d) Öffnen eines nachfolgenden Beobachtungszeitfensters und Aktivieren der lichtempfindlichen Mikrozelle (4) nach einem Zeitintervall ($t_{delay}$) ab dem Beginn des Beobachtungszeitfensters, wobei das Zeitintervall ($t_{delay}$) der jüngsten Detektionszeit ($t_{bgcurrent}$, $t_{totcurrent}$) reduziert um eine Zeitdifferenz (ST) entspricht;
e) Erfassen der Detektionszeit ($t_{bg}i$, $t_{tot}y$), die durch das Auftreffen eines einzelnen Photons (F) auf die lichtempfindliche Mikrozelle (4) bestimmt wird, und Warten, bis das Beobachtungszeitfenster erschöpft ist;
f) Überprüfen, ob die in Schritt e) erfasste Detektionszeit ($t_{bg}i$, $t_{tot}y$) größer als der jüngste Detektionszeitwert ($t_{bgcurrent}$, $t_{totcurrent}$) ist, und wenn ja, Validieren der in Schritt e) erfassten Detektionszeit ($t_{bg}i$, $t_{tot}y$) und Speichern der in Schritt e) erfassten Detektionszeit ($t_{bg}i$, $t_{tot}y$) als den jüngsten Detektionszeitwert ($t_{bgcurrent}$, $t_{totcurrent}$); im negativen Fall, Ablehnen der in Schritt e) erfasste Detektionszeit ($t_{bg}i$, $t_{tot}y$);
g) Wiederholen der Schritte c) bis f), bis keine Detektionszeit ($t_{bg}i$, $t_{tot}y$) für die gesamte Dauer (Tw) des Beobachtungszeitfensters erfasst wird.

10. Messvorrichtung (1) nach Anspruch 9, wobei die Verarbeitungsgruppe (5) eine Anzahl von Steuereinheiten (51) umfasst, die gleich der Anzahl von lichtempfindlichen Mikrozellen (4) ist, wobei jede der Steuereinheiten (51) betriebswirksam mit einer der lichtempfindlichen Mikrozellen (4) verbunden ist und wobei jede der Steuereinheiten (51) umfasst:

- einen Wandlerblock (6), der einen TDC oder alternativ einen TAC umfasst, wobei der Wandlerblock (6) konfiguriert ist, um die Detektionszeit ($t_{bg}i$, $t_{tot}y$) in ein digitales oder analoges Signal umzuwandeln;
- einen digitalen Prüfblock (9) zum Implementieren des Schritts f);
- einen Verarbeitungsblock (7), der konfiguriert ist, um die Betriebsschritte a) bis e) zu implementieren;
- einen digitalen Verzögerungsblock (8), der rückgekoppelt zwischen dem Verarbeitungsblock (7) und der lichtempfindlichen Mikrozelle (4) geschaltet ist, um die lichtempfindliche Mikrozelle (4) nach einem Zeitintervall ($t_{delay}$) ab dem Beginn des Beobachtungszeitfensters zu aktivieren, wobei das Zeitintervall ($t_{delay}$) der jüngsten Detektionszeit ($t_{bgcurrent}$, $t_{totcurrent}$) reduziert um eine Zeitdifferenz (ST) entspricht.

11. Messvorrichtung (1) nach einem der Ansprüche 5 bis 10 in Kombination mit Anspruch 3 oder Anspruch 4, wobei der Verarbeitungsblock Folgendes umfasst:

- einen ersten Photonenzähler (10), um die Anzahl von detektierten Photonen ($N_{bg}$) zu zählen und dessen Detektionszeiten ($t_{bg}i$) während des ersten Erfassungsschritts validiert wurden;
- einen zweiten Photonenzähler (11), um die Anzahl von Photonen ($N_{tot}$) zu zählen und dessen Detektionszeiten ($t_{tot}y$) während des zweiten Erfassungsschritts validiert wurden;
- einen ersten Detektionszeitakkumulator (12) zum Speichern der Detektionszeiten ($t_{bg}i$), die während des ersten Erfassungsschritts erfasst und validiert wurden;
- einen zweiten Detektionszeitakkumulator (13) zum Speichern der Detektionszeiten ($t_{tot}y$), die während des zweiten Erfassungsschritts erfasst und validiert wurden.

12. Messvorrichtung (1) nach einem der Ansprüche 5 bis 10 in Kombination mit Anspruch 3 oder Anspruch 4, wobei der Verarbeitungsblock (5) umfasst:

- einen Aufwärts-/Abwärts-Photonenzähler (14), um die Anzahl von detektierten Photonen ($N_{bg}$, $N_{tot}$) zu zählen und deren Detektionszeiten ($t_{bg}i$, $t_{tot}y$) während des ersten Erfassungsschritts und während des zweiten Erfassungsschritts validiert wurden;

- einen Aufwärts-/Abwärts-Detektionszeitakkumulator (15) zum Speichern der Detektionszeiten ($t_{bg}i$, $t_{tot}y$), die während des ersten Erfassungsschritts und während des zweiten Erfassungsschritts erfasst und validiert wurden.

**13.** Messvorrichtung (1) nach einem der Ansprüche 1 bis 4, wobei die Emissionsmittel (2) dazu konfiguriert sind, während des zweiten Erfassungsschritts eine pulsartige Lichtstrahlung (R) mit einer vorbestimmten Anzahl von Impulsen für jedes der Beobachtungszeitfenster zu emittieren.

**Revendications**

**1.** Dispositif de mesure (1) de la distance (d) d'un objet de référence (O), du type comprenant:

- des moyens d'émission (2) pour émettre un rayonnement lumineux (R) en direction dudit objet de référence (O), lesdits moyens d'émission (2) étant configurés pour émettre ledit rayonnement lumineux (R) de type pulsé;
- des moyens de réception (3) comprenant une zone (31) sensible audit rayonnement lumineux (R) renvoyé par ledit objet de référence (O), ladite zone sensible (31) étant pourvue d'une ou plusieurs microcellules photosensibles (4), chacune desdites microcellules photosensibles (4) étant configurée pour générer un signal électrique (S) suite à l'impact d'un seul photon (F) sur sa surface sensible (41);
- un groupe de traitement (5) configuré pour contrôler l'émission dudit rayonnement lumineux (R) par lesdits moyens d'émission (2) et pour contrôler l'activation de chacune desdites microcellules photosensibles (4);

dans lequel ledit groupe de traitement (5) est configuré pour effectuer ladite mesure en mettant en œuvre en séquence:

- une première étape d'acquisition qui prévoit, pour chacune desdites microcellules photosensibles (4), de démarrer une pluralité (n) de fenêtres temporelles d'observation consécutives (i) tout en maintenant désactivés lesdits moyens d'émission (2), chacune desdites fenêtres temporelles d'observation (i) ayant une durée prédéfinie (Tw) de manière à comprendre le temps de vol maximal, ToF, que l'on souhaite mesurer, ladite première étape d'acquisition prévoyant pour chacune desdites fenêtres temporelles d'observation (i) d'activer ladite microcellule photosensible (4) et d'acquérir le temps de détection ($t_{bg}i$) d'un seul photon (F) sur ladite microcellule photosensible (4) à partir de l'ouverture de ladite fenêtre temporelle d'observation (i);
- une seconde étape d'acquisition qui prévoit, pour chacune desdites microcellules photosensibles (4), de démarrer une pluralité (m) de fenêtres temporelles d'observation consécutives (y) en activant lesdits moyens d'émission (2), chacune desdites fenêtres temporelles d'observation (y) ayant ladite durée prédéfinie (Tw), ladite seconde étape d'acquisition prévoyant pour chacune desdites fenêtres temporelles d'observation (y) d'activer ladite microcellule photosensible (4) et d'acquérir le temps de détection ($t_{tot}y$) d'un seul photon (F) sur ladite microcellule photosensible (4) à partir de l'ouverture de ladite fenêtre temporelle d'observation (y);
- une étape de définition de la valeur du temps de vol de ladite mesure pour chacune desdites microcellules photosensibles (4), basée sur le traitement des temps de détection ($t_{tot}y$) acquis dans ladite seconde étape d'acquisition et des temps de détection ($t_{bg}i$) acquis dans ladite première étape d'acquisition;

**caractérisé en ce que:**

- ladite première étape d'acquisition prévoit pour chacune desdites fenêtres temporelles d'observation (i) que ledit temps de détection ($t_{bg}i$) n'est validé que dans le cas où il est supérieur au dernier temps de détection ($t_{bg}i$-1) précédemment acquis et validé, ladite première étape d'acquisition étant interrompue lorsque l'une desdites fenêtres temporelles d'observation (i) est épuisée sans l'acquisition et la validation d'un temps de détection ($t_{bg}i$);
- ladite seconde étape d'acquisition prévoit pour chacune desdites fenêtres temporelles d'observation (y) que ledit temps de détection ($t_{tot}y$) n'est validé que dans le cas où il est supérieur au dernier temps de détection ($t_{tot}y$-1) précédemment acquis et validé, ladite seconde étape d'acquisition étant interrompue lorsque l'une desdites fenêtres temporelles d'observation (y) est épuisée sans l'acquisition et la validation d'un temps de détection ($t_{tot}y$);
- ladite étape de définition de la valeur du temps de vol de ladite mesure pour chacune desdites microcellules photosensibles (4) est basée sur le traitement des temps de détection ($t_{tot}y$) acquis et validés dans ladite seconde étape d'acquisition et des temps de détection ($t_{bg}i$) acquis et validés dans ladite première étape d'acquisition.

**2.** Dispositif de mesure (1) selon la revendication 1, dans lequel ladite étape de définition de ladite valeur du temps de vol consiste à calculer la valeur moyenne des temps de détection ($t_{tot}y$) acquis et validés dans ladite seconde étape d'acquisition moins la valeur moyenne des temps de détection ($t_{bg}i$) acquis et validés dans ladite première étape d'acquisition.

**3.** Dispositif de mesure (1) selon la revendication 2, dans lequel ledit groupe de traitement (5) est configuré pour définir la valeur dudit temps de vol pour chacune desdites microcellules photosensibles (4) par la formule suivante

$$ToF = \frac{\bar{t}tot \cdot Ntot - \bar{t}bg \cdot Nbg}{Ntot - Nbg}$$

dans lequel $\bar{t}_{tot}$ est la moyenne des temps de détection ($t_{tot}y$) acquis et validés lors de ladite seconde étape d'acquisition, $N_{tot}$ est le nombre de photons détectés et dont les temps de détection ($t_{tot}y$) ont été validés lors de ladite seconde étape d'acquisition, $\bar{t}_{bg}$ est la moyenne des temps de détection ($t_{bg}i$) acquis et validés lors de ladite première étape d'acquisition, $N_{bg}$ est le nombre de photons détectés et dont les temps de détection ($t_{bg}i$) ont été validés lors de ladite première étape d'acquisition.

**4.** Dispositif de mesure (1) selon la revendication 2, dans lequel ledit groupe de traitement (5) est configuré pour définir ladite valeur dudit temps de vol pour chacune desdites microcellules photosensibles (4) par la formule suivante

$$ToF = \frac{\sum_{acq} \sum_{y=1}^{m} ttoty - \sum_{acq} \sum_{i=1}^{n} tbgi}{\sum_{acq} Ntot - \sum_{acq} Nbg}$$

dans lequel $\sum_{i=1}^{n}$ et $\sum_{y=1}^{m}$ représentent respectivement la somme des temps de détection ($t_{bg}i$, $t_{tot}y$) acquis et validés lors de ladite première étape d'acquisition et lors de ladite seconde étape d'acquisition, et $\sum_{acq}$ représente la somme desdites sommes $\sum_{i=1}^{n}$ et $\sum_{y=1}^{m}$ des temps de détection ($t_{bg}i$, $t_{tot}y$) et du nombre de photons ($N_{bg}$) et du nombre de photons détectés ($N_{tot}$) et dont les temps de détection ($t_{bg}i$, $t_{tot}y$) ont été respectivement validés lors de la réalisation d'une pluralité de premières étapes d'acquisition réalisées ultérieurement et lors de la réalisation d'une pluralité de secondes étapes d'acquisition réalisées ultérieurement.

**5.** Dispositif de mesure (1) selon l'une quelconque des revendications précédentes, dans lequel pour ladite première étape d'acquisition et ladite seconde étape d'acquisition, pour chacune desdites microcellules photosensibles (4), ledit groupe de traitement (5) est configuré pour:

a) activer ladite microcellule photosensible (5) au moment du début de la première fenêtre temporelle d'observation;
b) acquérir un premier temps de détection ($t_{bg}i$, $t_{tot}y$) déterminé par l'impact d'un seul photon (F) sur ladite microcellule photosensible (4), considérer ledit premier temps de détection ($t_{bg}i$, $t_{tot}y$) comme valide et attendre que ladite première fenêtre temporelle d'observation soit épuisée;
c) ouvrir une fenêtre temporelle d'observation ultérieure et activer ladite microcellule photosensible (4) après un intervalle de temps ($t_{delay}$) par rapport à ladite ouverture de ladite fenêtre temporelle d'observation (i, y), ledit intervalle de temps ($t_{delay}$) correspondant au temps de détection ($t_{bg}i$-1, $t_{tot}y$-1) acquis et validé au cours de la fenêtre temporelle d'observation immédiatement précédente;
d) acquérir le temps de détection ($t_{bg}i$, $t_{tot}y$) déterminé par l'impact d'un seul photon (F) sur ladite microcellule photosensible (4), considérer ledit temps de détection ($t_{bg}i$, $t_{tot}y$) comme valide et attendre que ladite fenêtre temporelle d'observation soit épuisée;
e) répéter les étapes c) et d) jusqu'à ce qu'aucun temps de détection ($t_{bg}i$, $t_{tot}y$) ne soit acquis et validé pour la durée totale (Tw) de la fenêtre temporelle d'observation.

**6.** Dispositif de mesure (1) selon la revendication 5, dans lequel ledit groupe de traitement (5) comprend un nombre d'unités de commande (51) égal au nombre desdites microcellules photosensibles (4), dans lequel chacune desdites unités de commande (51) est connectée de manière opérationnelle à l'une desdites microcellules photosensibles (4) et dans lequel chacune desdites unités de commande (51) comprend:

- un bloc convertisseur (6), comprenant un TDC, Convertisseur Temps-Numérique, ou, alternativement, un TAC, Convertisseur Temps-Analogique, ledit bloc convertisseur (6) étant configuré pour convertir ledit temps de détection ($t_{bg}i$, $t_{tot}y$) en un signal numérique ou analogique;
- un bloc de traitement (7) configuré pour mettre en œuvre les étapes de fonctionnement a) à e);
- un bloc de retard numérique (8), connecté en retour entre ledit bloc de traitement (7) et ladite microcellule photosensible (4), de manière à activer ladite microcellule photosensible (4) après un intervalle de temps ($t_{delay}$) à partir du début de la fenêtre temporelle d'observation, ledit intervalle de temps ($t_{delay}$) correspondant au temps de détection ($t_{bg}i-1$, $t_{tot}y-1$) acquis et validé au cours de la fenêtre temporelle d'observation immédiatement précédente.

**7.** Dispositif de mesure (1) selon l'une quelconque des revendications 1 à 4, dans lequel pour ladite première étape d'acquisition et ladite seconde étape d'acquisition, pour chacune desdites microcellules photosensibles (4), ledit groupe de traitement (5) est configuré pour:

a) activer ladite microcellule photosensible (4) à l'instant du début de la première fenêtre temporelle d'observation;
b) acquérir un premier temps de détection ($t_{bg}i$, $t_{tot}y$) déterminé par l'impact d'un seul photon (F) sur ladite microcellule photosensible (4) et attendre que ladite première fenêtre temporelle d'observation soit épuisée;
c) valider ledit premier temps de détection ($t_{bg}i$, $t_{tot}y$) et stocker ledit premier temps de détection ($t_{bg}i$, $t_{tot}y$) en tant que valeur de temps de détection la plus récente ($t_{bgcurrent}$, $t_{totcurrent}$);
d) ouvrir une fenêtre temporelle d'observation ultérieure et activer ladite microcellule photosensible (4) à l'instant du début de ladite fenêtre temporelle d'observation ultérieure;
e) acquérir le temps de détection ($t_{bg}i$, $t_{tot}y$) déterminé par l'impact d'un seul photon (F) sur ladite microcellule photosensible (4) et attendre que ladite fenêtre temporelle d'observation ultérieure soit épuisée;
f) vérifier si ledit temps de détection ($t_{bg}i$, $t_{tot}y$) acquis à l'étape e) est supérieur à ladite valeur de temps de détection la plus récente ($t_{bgcurrent}$, $t_{totcurrent}$) et, dans l'affirmative, valider ledit temps de détection ($t_{bg}i$, $t_{tot}y$) acquis à ladite étape e) et stocker ledit temps de détection ($t_{bg}i$, $t_{tot}y$) acquis à ladite étape e) en tant que valeur de temps de détection la plus récente ($t_{bgcurrent}$, $t_{totcurrent}$); dans le cas négatif, rejeter ledit temps de détection ($t_{bg}i$, $t_{tot}y$) acquis à l'étape e);
g) répéter les étapes d) à f) jusqu'à ce qu'aucun temps de détection ($t_{bg}i$, $t_{tot}y$) ne soit acquis et validé pour la durée totale (Tw) de la fenêtre temporelle d'observation.

**8.** Dispositif de mesure (1) selon la revendication 7, dans lequel ledit groupe de traitement (5) comprend un nombre d'unités de commande (51) égal au nombre desdites microcellules photosensibles (4), dans lequel chacune desdites unités de commande (51) est connectée de manière opérationnelle à l'une desdites microcellules photosensibles (4) et dans lequel chacune desdites unités de commande (51) comprend:

- un bloc convertisseur (6), comprenant un TDC ou, alternativement, un TAC, ledit bloc convertisseur (6) étant configuré pour convertir ledit temps de détection ($t_{bg}i$, $t_{tot}y$) en un signal numérique ou analogique;
- un bloc de contrôle numérique (9) pour mettre en œuvre ladite étape f);
- un bloc de traitement (7) configuré pour mettre en œuvre les étapes de fonctionnement a) à e).

**9.** Dispositif de mesure (1) selon l'une quelconque des revendications 1 à 4, dans lequel pour ladite première étape d'acquisition et ladite seconde étape d'acquisition, pour chacune desdites microcellules photosensibles (4), ledit groupe de traitement (5) est configuré pour:

a) activer ladite microcellule photosensible (4) à l'instant du début de la première fenêtre temporelle d'observation;
b) acquérir un premier temps de détection ($t_{bg}i$, $t_{tot}y$) déterminé par l'impact d'un seul photon (F) sur ladite microcellule photosensible (4) et attendre que ladite première fenêtre temporelle d'observation soit épuisée;
c) valider ledit premier temps de détection ($t_{bg}i$, $t_{tot}y$) et stocker ledit premier temps de détection ($t_{bg}i$, $t_{tot}y$) en tant que valeur de temps de détection la plus récente ($t_{bgcurrent}$, $t_{totcurrent}$);
d) ouvrir une fenêtre temporelle d'observation ultérieure et activer ladite microcellule photosensible (4) après un intervalle de temps ($t_{delay}$) à partir du début de la fenêtre temporelle d'observation, ledit intervalle de temps ($t_{delay}$) correspondant audit temps de détection le plus récent ($t_{bgcurrent}$, $t_{totcurrent}$) réduit d'une différence de temps (ST);
e) acquérir le temps de détection ($t_{bg}i$, $t_{tot}y$) déterminé par l'impact d'un seul photon (F) sur ladite microcellule photosensible (4) et attendre que ladite fenêtre temporelle d'observation soit épuisée;
f) vérifier si ledit temps de détection ($t_{bg}i$, $t_{tot}y$) acquis à l'étape e) est supérieur à ladite valeur de temps de détection la plus récente ($t_{bgcurrent}$, $t_{totcurrent}$) et, dans l'affirmative, valider ledit temps de détection ($t_{bg}i$, $t_{tot}y$)

acquis à ladite étape e) et stocker ledit temps de détection ($t_{bg}i$, $t_{tot}y$) acquis à ladite étape e) en tant que valeur de temps de détection la plus récente ($t_{bgcurrent}$, $t_{totcurrent}$); dans le cas négatif, rejeter ledit temps de détection ($t_{bg}i$, $t_{tot}y$) acquis à l'étape e);

g) répéter les étapes c) à f) jusqu'à ce qu'aucun temps de détection ($t_{bg}i$, $t_{tot}y$) ne soit acquis pendant toute la durée (Tw) de la fenêtre temporelle d'observation.

10. Dispositif de mesure (1) selon la revendication 9, dans lequel ledit groupe de traitement (5) comprend un nombre d'unités de commande (51) égal au nombre desdites microcellules photosensibles (4), dans lequel chacune desdites unités de commande (51) est connectée de manière opérationnelle à l'une desdites microcellules photosensibles (4) et dans lequel chacune desdites unités de commande (51) comprend:

- un bloc convertisseur (6), comprenant un TDC ou, alternativement, un TAC, ledit bloc convertisseur (6) étant configuré pour convertir ledit temps de détection ($t_{bg}i$, $t_{tot}y$) en un signal numérique ou analogique;
- un bloc de contrôle numérique (9) pour mettre en œuvre ladite étape f);
- un bloc de traitement (7) configuré pour mettre en œuvre les étapes de fonctionnement a) à e);
- un bloc de retard numérique (8), connecté en retour entre ledit bloc de traitement (7) et ladite microcellule photosensible (4), de manière à activer ladite microcellule photosensible (4) après un intervalle de temps ($t_{delay}$) à partir du début de la fenêtre temporelle d'observation, ledit intervalle de temps ($t_{delay}$) correspondant audit temps de détection le plus récent ($t_{bgcurrent}$, $t_{totcurrent}$) réduit d'une différence temporelle (ST).

11. Dispositif de mesure (1) selon l'une quelconque des revendications 5 à 10, en combinaison avec la revendication 3 ou la revendication 4, dans lequel ledit bloc de traitement comprend:

- un premier compteur de photons (10) pour compter ledit nombre de photons détectés ($N_{bg}$) et dont les temps de détection ($t_{bg}i$) ont été validés lors de ladite première étape d'acquisition;
- un second compteur de photons (11) pour compter ledit nombre de photons ($N_{tot}$) et dont les temps de détection ($t_{tot}y$) ont été validés lors de ladite seconde étape d'acquisition;
- un premier accumulateur de temps de détection (12) pour stocker lesdits temps de détection ($t_{bg}i$) acquis et validés au cours de ladite première étape d'acquisition;
- un second accumulateur de temps de détection (13) pour stocker lesdits temps de détection ($t_{tot}y$) acquis et validés au cours de ladite seconde étape d'acquisition.

12. Dispositif de mesure (1) selon l'une quelconque des revendications 5 à 10, en combinaison avec la revendication 3 ou la revendication 4, dans lequel ledit bloc de traitement (5) comprend:

- un compteur de photons (14) de type haut/bas pour compter le nombre de photons ($N_{bg}$, $N_{tot}$) détectés et dont les temps de détection ($t_{bg}i$, $t_{tot}y$) ont été validés lors de ladite première étape d'acquisition et lors de ladite seconde étape d'acquisition;
- un accumulateur de temps de détection (15) de type haut/bas pour stocker les temps de détection ($t_{bg}i$, $t_{tot}y$) acquis et validés lors de ladite première étape d'acquisition et lors de ladite seconde étape d'acquisition.

13. Dispositif de mesure (1) selon l'une quelconque des revendications 1 à 4, dans lequel lesdits moyens d'émission (2) sont configurés pour émettre un rayonnement lumineux de type pulsé (R) avec un nombre prédéterminé d'impulsions pour chacune desdites fenêtres temporelles d'observation pendant ladite seconde étape d'acquisition.

Fig. 1

Fig. 2

Fig. 3

TDC code

Fig. 4

EP 4 511 676 B1

Fig.5

Fig.6

EP 4 511 676 B1

Fig.7

Fig.8

23

Fig.9

Fig.10

Fig.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019250257 A
- US 2015177369 A